# EUROPEAN PATENT SPECIFICATION

(11) **EP 4 132 099 B1**
(45) Date of publication and mention of the grant of the patent: **26.11.2025**
(21) Application number: 21808093.5
(22) Date of filing: 20.05.2021
(51) Int. Cl.: H04W 36/00, H04W 36/14, H04W 36/32, H04W 4/16, H04W 60/04

(54) **METHOD AND APPARATUS FOR IMPROVING QUALITY OF MEDIA SERVICE**
VERFAHREN UND VORRICHTUNG ZUR VERBESSERUNG DER QUALITÄT EINES MEDIENDIENSTES
PROCÉDÉ ET APPAREIL POUR AMÉLIORER LA QUALITÉ D'UN SERVICE DE MEDIA

(30) Priority: 20.05.2020 KR 20200060628
(43) Date of publication of application: 08.02.2023
(73) Proprietor: Samsung Electronics Co., Ltd., Suwon-si, Gyeonggi-do 16677 (KR)
(72) Inventor: JEONG, Sangsoo, Suwon-si, Gyeonggi-do 16677 (KR)
(74) Representative: Gulde & Partner
(86) International application number: PCT/KR2021/006265
(87) International publication number: WO 2021/235858

(56) References cited:
- KR-A- 20130 035 143
- KR-A- 20150 131 902
- US-A1- 2020 077 356
- SAMSUNG ET AL: "Update of 5GS\EPS Fallback test cases for System information, type of cells and more", vol. RAN WG5, no. Ljubljana, Slovenia; 20190826 - 20190830, 30 August 2019 (2019-08-30), XP051775199, Retrieved from the Internet <URL:http://www.3gpp.org/ftp/tsg_ran/WG5_Test_ex-T1/TSGR5_84_Ljubljana/Docs/R5-197091.zip> [retrieved on 20190830]
- "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.4.0, 27 March 2020 (2020-03-27), Mobile Competence Centre ; 650, route des Lucioles ; F-06921 Sophia-Antipolis Cedex ; France , pages 1 - 582, XP051861092
- ERICSSON: "QoS Flows reestablished during EPS Fallback", 3GPP DRAFT; S2-2001840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic Meeting; 20200224 - 20200227, 18 February 2020 (2020-02-18), Mobile Competence Centre ; 650, route des Lucioles ; F-06921 Sophia-Antipolis Cedex ; France , XP051855253
- "3rd Generation Partnership Project; Technical Specification Group Services and System Aspects; General Packet Radio Service (GPRS) enhancements for Evolved Universal Terrestrial Radio Access Network (E-UTRAN) access (Release 16)", 3GPP STANDARD; TECHNICAL SPECIFICATION; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.6.0, 27 March 2020 (2020-03-27), Mobile Competence Centre ; 650, route des Lucioles ; F-06921 Sophia-Antipolis Cedex ; France , pages 1 - 436, XP051861088

## Description

### TECHNICAL FIELD

The present disclosure relates to a method and apparatus for improving the quality of a media service, and more particularly, to a method for improving the quality of a voice service when a user equipment (UE) transmits voice data.

### BACKGROUND ART

In order to meet the increasing demand with respect to wireless data traffic after the commercialization of 4^{th} generation (4G) communication systems, efforts have been made to develop improved 5^{th} generation (5G) communication systems or pre-5G communication systems. For this reason, the 5G communication system or the pre-5G communication system is called a beyond 4G network communication system or a post-long term evolution (LTE) system. In order to achieve high data rates, the implementation of 5G communication systems in an ultra-high frequency millimeter-wave (mmWave) band (e.g., a 60-gigahertz (GHz) band) is being considered. In order to reduce pathloss of radio waves and increase a transmission distance of radio waves in the ultra-high frequency band, for 5G communication systems, various technologies such as beamforming, massive multiple-input and multiple-output (massive MIMO), full-dimension MIMO (FD-MIMO), array antennas, analog beamforming, and large-scale antennas are being studied. Also, in order to improve system networks for 5G communication systems, various technologies such as evolved small cells, advanced small cells, cloud radio access networks (cloud-RAN), ultra-dense networks, device-to-device (D2D) communication, wireless backhaul, moving networks, cooperative communication, coordinated multi-points (CoMP), and received-interference cancellation have been developed. Furthermore, for 5G communication systems, development of an advanced coding modulation (ACM) scheme such as hybrid frequency-shift keying (FSK) and quadrature amplitude modulation (QAM) modulation (FQAM) or sliding window superposition coding (SWSC) and an enhanced network access scheme such as filter bank multi-carrier (FBMC), non-orthogonal multiple access (NOMA), or sparse code multiple access (SCMA), is underway.

The Internet has evolved from a human-based connection network, where humans create and consume information, to the Internet of things (IoT), where distributed elements such as objects exchange information with each other to process the information. Internet of Everything (IoE) technology, which is a combination of IoT technology and big data processing technology through connection with a cloud server or the like, is also emerging. In order to implement the loT, technology elements such as sensing technology, wired/wireless communication and network infrastructures, service interface technology, and security technology are required, and thus, technologies for inter-object connection, such as sensor network, machine to machine (M2M) communication, or machine-type communication (MTC), have recently been studied. In an IoT environment, intelligent Internet technology (IT) services that collect and analyze data generated by connected objects and create new value in human life may be provided. IoT may be applied to a variety of areas, such as smart homes, smart buildings, smart cities, smart cars or connected cars, smart grid, health care, smart home appliances, and advanced medical services through convergence and combination between existing Information Technologies (IT) and various industrial applications.

Accordingly, various attempts have been made to apply 5G communication systems to loT networks. For example, technologies such as sensor network, M2M communication, and MTC are implemented by 5G communication technologies such as beamforming, MIMO, and array antenna. The application of a cloud-RAN as big data processing technology may also be considered as an example of convergence of 5G technology and loT technology.

With the recent development of next-generation mobile communication systems, there is a demand for a method and apparatus for more efficiently providing a media service.

Technical document 3GPP TSG-RAN5 Meeting #84 (R5-197091) discloses a multilayer procedure for 5GS/EPS fallback.

### DESCRIPTION OF EMBODIMENTS

### TECHNICAL PROBLEM

Objectives of disclosed embodiments are to provide a method of more efficiently providing a media service in a next-generation mobile communication system.

### SOLUTION TO PROBLEM

The present invention is defined by the appended set of claims.

An operating method of a user equipment in a wireless communication system according to an embodiment of the present disclosure includes receiving, from a next-generation radio access network, NG-RAN, a message including information indicating evolved packet system, EPS, fallback, transmitting, to a mobility management entity, MME, a tracking area update, TAU, request message including an active flag indicating that a connection between an EPS and the UE is required to be maintained after completion of a tracking area updating procedure in case that the UE is connected to the EPS and receiving, from the MME, a TAU accept message, based on the TAU request message.

### ADVANTAGEOUS EFFECTS OF DISCLOSURE

Disclosed embodiments may provide a method of more efficiently providing a media service in a next-generation mobile communication system.

### BRIEF DESCRIPTION OF DRAWINGS

FIG. 1 is a diagram illustrating a service-based architecture (SBA)-based 5^{th} generation (5G) system structure, according to an embodiment of the present disclosure.
FIG. 2 is a diagram illustrating a network structure, according to an embodiment of the present disclosure.
FIG. 3 is a flowchart illustrating a method of preventing connection of a user equipment (UE) from being released from a target system on a control plane, according to an embodiment of the present disclosure.
FIG. 4 is a flowchart illustrating a method of preventing connection of a UE from being released from a target system on a user plane, according to an embodiment of the present disclosure.
FIG. 5 is a flowchart illustrating a method by which a core network prevents connection of a UE from being released from a target system, according to an embodiment of the present disclosure.
FIG. 6 is a flowchart illustrating a method by which a core network prevents connection of a UE from being released from a target system, according to an embodiment of the present disclosure.
FIG. 7 is a block diagram schematically illustrating a structure of a UE, according to an embodiment of the present disclosure.
FIG. 8 is a block diagram schematically illustrating a structure of a base station, according to an embodiment of the present disclosure.
FIG. 9 is a block diagram schematically illustrating a structure of a network entity, according to an embodiment of the present disclosure.

### BEST MODE

According to an embodiment of the present disclosure, there is provided a method performed by a user equipment (UE) in a wireless communication system. The method includes receiving, from a next-generation radio access network, NG-RAN, a message including information indicating evolved packet system, EPS, fallback, transmitting, to a mobility management entity, MME, a tracking area update, TAU, request message including an active flag indicating that a connection between an EPS and the UE is required to be maintained after completion of a tracking area updating procedure in case that the UE is connected to the EPS and receiving, from the MME, a TAU accept message, based on the TAU request message.

The identifier may be an active flag.

The method may further include, after the receiving of the TAU accept message from the MME, maintaining connection between the MME and the UE, based on the TAU request.

The method may further include, in case that handover is initiated by the NG-RAN, performing handover from the 5GS to an EPS.

The method may further include, even when there is no user data to be transmitted, determining a state of the UE as a state where there is user data to be transmitted, and wherein the identifier indicating that the connected state needs to be maintained is included in the TAU request based on the determined state of the UE.

The method may further include, based on the state of the UE, generating temporary user data for maintaining the connected state, or generating state information indicating that there is user data to be transmitted even when there is no user data to be transmitted.

According to an embodiment of the present disclosure, there is provided a method of a mobility management system (MME) in a wireless communication system. The operating method of the MME includes receiving, from a user equipment (UE) registered in a 5^{th} generation system (5GS) and an IP multimedia subsystem (IMS), a tracking area update (TAU) request including an identifier indicating that a connected state needs to be maintained, based on a signal indicating evolved packet system (EPS) fallback, and transmitting, to the UE, a TAU accept message based on the TAU request.

The identifier may be an active flag.

The method may further include, after the transmitting of the TAU accept message to the UE, maintaining connection between the MME and the UE, based on the TAU request.

The method may further include, when handover is initiated by a next-generation radio access network (NG-RAN), performing handover from the 5GS to an EPS.

According to an embodiment of the present disclosure, there is provided a user equipment (UE) performed in a wireless communication system. The UE includes a transceiver, and at least one processor configured to allow the UE registered in a 5^{th} generation system (5GS) and an IP multimedia subsystem (IMS) to receive a signal indicating evolved packet system (EPS) fallback from a next-generation radio access network (NG-RAN), and transmit a tracking area update (TAU) request including an identifier indicating that a connected state needs to be maintained, to a mobility management system (MME), based on the signal indicating the EPS fallback. Also, the at least one processor may be further configured to receive a TAU accept message from the MME, based on the TAU request.

The identifier may be an active flag.

The at least one processor may be further configured to, after the receiving of the TAU accept message from the MME, maintain connection between the MME and the UE, based on the TAU request.

The at least one processor may be further configured to, in case that handover is initiated by the NG-RAN, perform handover from the 5GS to an EPS.

The at least one processor may be further configured to, even when there is no user data to be transmitted, determine a state of the UE as a state where there is user data to be transmitted. Also, the identifier indicating that the connected state needs to be maintained may be included in the TAU request based on the determined state of the UE.

### MODE OF DISCLOSURE

In the following descriptions of the present disclosure, well-known functions or configurations are not described in detail because they would obscure the present disclosure with unnecessary details. Hereinafter, embodiments of the present disclosure will be described with reference to the drawings.

The advantages and features of the present disclosure and methods of achieving them will become apparent with reference to embodiments of the present disclosure described in detail below along with the attached drawings. The present disclosure may, however, be embodied in many different forms and should not be construed as limited to embodiments of the present disclosure set forth herein; rather these embodiments of the present disclosure are provided so that this disclosure will be thorough and complete, and will fully convey the scope of the present disclosure to one of ordinary skill in the art, and the scope of the present disclosure is defined only by the accompanying claims. In the specification, the same reference numerals denote the same elements.

It will be understood that each block of flowchart illustrations and combinations of blocks in the flowchart illustrations may be implemented by computer program instructions. Because these computer program instructions may be loaded into a processor of a general-purpose computer, special purpose computer, or other programmable data processing equipment, the instructions, which are executed via the processor of the computer or other programmable data processing equipment generate means for performing the functions specified in the flowchart block(s). Because these computer program instructions may also be stored in a computer-executable or computer-readable memory that may direct the computer or other programmable data processing equipment to function in a particular manner, the instructions stored in the computer- executable or computer-readable memory may produce an article of manufacture including instruction means for performing the functions stored in the flowchart block(s). Because the computer program instructions may also be loaded into a computer or other programmable data processing equipment, a series of operational steps may be performed on the computer or other programmable data processing equipment to produce a computer implemented process, and thus, the instructions executed on the computer or other programmable data processing equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in the reverse order, according to the functionality involved.

The term "... unit" used in the present embodiment refers to a software or hardware component, such as a field-programmable gate array (FPGA) or an application-specific integrated circuit (ASIC), which performs certain tasks. However, the term "... unit" does not mean to be limited to software or hardware. A "... unit" may be configured to be in an addressable storage medium or may be configured to operate one or more processors. Thus, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "... units" may be combined into fewer components and "... units" or may be further separated into additional components and "... units". Furthermore, components and "... units" may be implemented to operate one or more central processing units (CPUs) in a device or a secure multimedia card. Also, a "... unit" in an embodiment may include one or more processors.

In the following descriptions of the present disclosure, well-known functions or configurations are not described in detail because they would obscure the present disclosure with unnecessary details. The terms used herein are those defined in consideration of functions in the present disclosure, and may vary according to the intention of users or operators, precedents, etc. Hence, the terms used herein should be defined based on the meaning of the terms together with the descriptions throughout the specification.

Hereinafter, terms indicating an access node, terms indicating network entities or network functions (NFs), terms indicating messages, terms indicating an interface between network entities, and terms indicating various pieces of identification information used herein are exemplified for convenience of explanation. Accordingly, the present disclosure is not limited to the terms described below, and other terms indicating objects having equal technical meanings may be used.

Hereinafter, for convenience of explanation, some terms and names defined in the 3^{rd} generation partnership project long term evolution (3GPP LTE) and 5^{th} generation (5G) standards may be used. However, the present disclosure may not be limited to the terms and names, and may also be applied to systems following other standards.

In describing embodiments of the present disclosure, a method of improving the quality of a voice service in a state where 5G and existing systems (4^{th} generation (4G), 3^{rd} generation (3G), and 2^{nd} generation (2G) systems) coexist will be mainly described, but the main point of the present disclosure may be applied to any type of wireless communication system, and may be applied not only to a voice service but also to other types of services (e.g., video call, gaming, and chatting).

Hereinafter, a base station is an entity that allocates resources to a terminal and may be at least one of a gNode B, an eNode B, a node B, a base station (BS), a radio access unit, a base station controller, or a node on a network. A terminal may include a user equipment (UE), a mobile station (MS), a cellular phone, a smartphone, a computer, or a multimedia system capable of performing a communication function. However, the present disclosure is not limited to the above examples.

In particular, the present disclosure may be applied to 3GPP NR (5G mobile communication standard). Also, the present disclosure may be applied to intelligent services based on 5G communication technology and Internet of Things (loT)-related technology (e.g., smart home, smart building, smart city, smart car or connected car, health care, digital education, retail business, security, and safety-related services). In the present disclosure, an eNB may be interchangeably used with a gNB for convenience of explanation. That is, a base station described as an eNB may represent a gNB. In the present disclosure, the term "terminals" may refer to not only mobile phones, narrowband Internet of Things (NB-loT) devices, and sensors but also other wireless communication devices.

A wireless communication system has developed beyond the initially provided voice-based service into a broadband wireless communication system that provides a high speed and high quality packet data service, using communication standards such as high-speed packet access (HSPA) of 3^{rd} generation partnership project (3GPP), long term evolution (LTE) or evolved universal terrestrial radio access (E-UTRA), LTE-advanced (LTE-A), LTE-Pro, high-rate packet data (HRPD) of 3GPP2, ultra-mobile broadband (UMB), and 802.16e of Institute of Electrical and Electronics Engineers (IEEE).

An LTE system, which is a representative example of a broadband wireless communication system, employs an orthogonal frequency division multiplexing (OFDM) scheme for a downlink (DL), and employs a single carrier frequency division multiple access (SC-FDMA) scheme for an uplink (UL). The uplink is a radio link through which a terminal (e.g., a user equipment (UE) or a mobile station (MS)) transmits data or a control signal to a base station (e.g., an eNode B or a base station (BS)), and the downlink is a radio link through which the base station transmits data or a control signal to the terminal. In the multiple access scheme, time-frequency resources for carrying data or control information are allocated and operated in a manner to prevent overlapping of the resources, i.e., to establish orthogonality between users so as to identify data or control information of each user.

As post-LTE systems, 5G systems need to support services capable of simultaneously reflecting and satisfying various requirements of users, service providers, etc. Services considered for 5G communication systems include enhanced mobile broadband (eMBB), massive machine type communication (mMTC), and ultra-reliable low-latency communication (URLLC).

Also, although embodiments of the present disclosure will be described based on an LTE, LTE-A, LTE Pro, or 5G (or NR, next generation mobile communication) system, the embodiments of the present disclosure may be applied to other communication systems having a similar technical background or channel type. Also, the embodiments of the present disclosure may be applied to other communication systems through some modifications without departing from the scope of the present disclosure based on a determination by one of ordinary skill in the art.

New system structures and protocols were needed to support various services of 5G, and 3GPP decided to introduce new technology referred to as service-based architecture (SBA). Main characteristics of SBA involve dividing functionalities of NFs defined in the 3GPP standard into services by considering virtualization technology, the introduction of cloud environment, and web-based service expansion, and using a hypertext transfer protocol version 2 (HTTP/2) protocol in implementing the services.

Hereinafter, operational principles of the present disclosure will be described in detail with reference to the accompanying drawings.

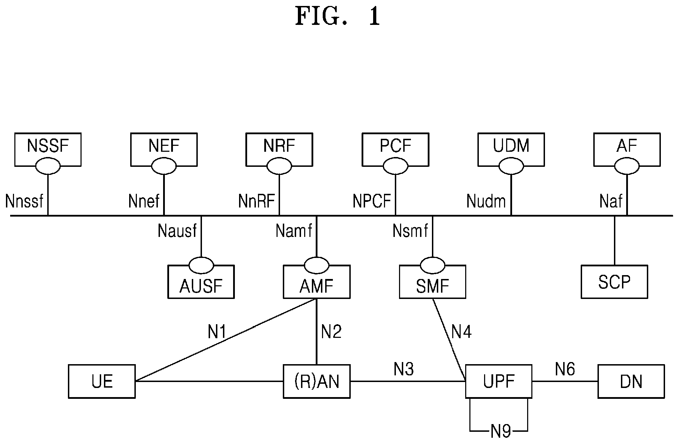

FIG. 1 is a diagram illustrating a service-based architecture (SBA)-based 5G system structure, according to an embodiment of the present disclosure.

Referring to FIG. 1, a (radio) access network ((R)AN) is an entity that allocates resources to a terminal, and may be at least one of an eNode B, a Node B, a base station (BS), a next-generation radio access network (NG-RAN), a radio access unit, a base station controller, or a node on a network.

A terminal may include a user equipment (UE), a next-generation (NG) UE, a mobile station (MS), a cellular phone, a smartphone, a computer, or a multimedia system capable of performing a communication function

Also, although embodiments of the present disclosure will be described based on a 5G system, the embodiments of the present disclosure may be applied to other communication systems having a similar technical background. Also, the embodiments of the present disclosure may be applied to other communication systems through some modifications without departing from the scope of the present disclosure based on a determination by one of ordinary skill in the art.

As 4G systems evolve into 5G systems, a next generation (NG) core or 5G core network (5GC) which is a new core network has been defined in wireless communication systems. A new core network supports virtualization of all existing network entities (NEs) into network functions (NEs). According to an embodiment of the present disclosure, an NF may denote a network entity, a network component, or a network resource.

According to an embodiment of the present disclosure, a 5GC may include NFs shown in FIG. 1. However, the present disclosure is not limited to the example of FIG. 1, and the 5GC may include more or fewer NFs than the NFs shown in FIG. 1.

Referring to FIG. 1, an SBA-based 5G system may include an access and mobility management function (AMF), a session management function (SMF), a user plane function (UPF), an unstructured data storage network function (UDSF), etc.

Referring to FIG. 1, the AMF may refer to an NF for managing wireless network access and mobility for a user equipment (UE).

The SMF is an NF for managing a session for the UE, and session information may include QoS information, charging information, and packet processing information.

The UPF is an NF for processing user plane traffic, and may be controlled by the SMF.

A policy control function (PCF) is an NF for applying a service policy, a charging policy, and a PDU session policy of a mobile communication operator for the UE.

A unified data management (UDM) may be an NF for storing information about a subscriber.

A network exposure function (NEF) may be a function for providing information about the UE to a server outside a 5G network. Also, the NEF may provide information necessary for a service to the 5G network and store the information in a UDR.

A network repository function (NRF) may perform a function of discovering an NF.

An authentication server function (AUSF) may perform UE authentication in a 3GPP access network and a non-3GPP access network.

A network slice selection function (NSSF) may perform a function of selecting a network slice instance provided to the UE. A data network (DN) may be a data network in which the UE transmits and receives data to use a service of a network operator or a 3^{rd} party service.

Although not shown in FIG. 1, an unstructured data storage network function (UDSF) may be included in the 5G system, and the UDSF may be an NF for storing unstructured data. The UDSF may store or retrieve all types of data including unstructured data at a request of an NF.

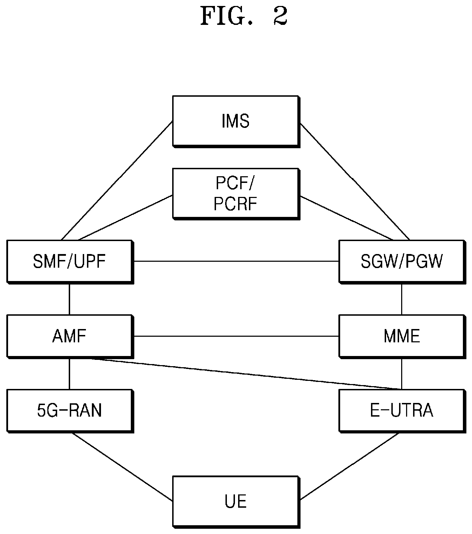

FIG. 2 is a diagram illustrating a network structure, according to an embodiment of the present disclosure.

For convenience of explanation, a network structure in which a serving gateway (SGW) and a packet data network gateway (PGW) are integrated and a policy and charging rules function (PCRF) and a PCF are integrated as shown in FIG. 2 is assumed. However, an embodiment of the disclosure may be applied even when the SGW and the PGW are separated from each other or the PCRF and the PCF are separated from each other.

Also, although a case where a UE uses an evolved packet core (EPC) non-access stratum (NAS) in an E-UTRA network (i.e., E-UTRA accesses a mobility management entity (MME)) and a case where the UE uses a 5GC NAS (i.e., E-UTRA accesses an AMF) are not distinguished from each other in FIG. 2, actually, the implementation and utilization of each case may be separately made.

FIG. 2 is a diagram illustrating a logical network structure. Accordingly, although not shown in the logical network structure, cells of a 5G-RAN and a 4G (E-UTRA) may overlap each other according to a construction of a physical wireless network. When the cells of the 5G-RAN and the 4G (E-UTRA) overlap each other or the coverage of 5G cells is insufficient in the early stage of 5G commercialization, a voice/video call service may be set to be supported in specific radio access technology (RAT) (4G in the present disclosure).

Also, when various types of core networks (e.g., a 5G core (5GC) and an EPC) coexist according to operator settings, a voice/video call service may be set to be supported only in a specific core network. For example, a voice/video call service may be set to be supported only in the EPC, not the 5GC, according to commercialization time of 5G communication technology.

When a voice/video call service occurs (hereinafter, voice/video is simply referred to as voice) while a UE is registered in a network, and a type of a RAT or core network to which the UE is currently connected should be changed, the UE should transition to a RAT or core network capable supporting the voice/video call service. Transitioning a UE s to a RAT or core network capable of supporting a service to the UE may be performed by explicitly transmitting a command or a request message to the UE from a network or may be actively performed by the UE in consideration of a current state. In more detail, when a voice call occurs while a UE is registered in a 5G system (5GS), a method of transitioning the UE from the 5GS to an evolved packet system (EPS) may be referred to as EPS fallback. Also, a method of transitioning only a RAT (or RAN) while a core network to which the UE is connected is maintained may be referred to as inter-RAT fallback. The above two technologies are collectively referred to as fallback.

When fallback technology described above is used, a UE may transition to a target system. When EPS fallback is used, a tracking area update procedure for changing a registration state of a UE from a 5GS to an EPS is performed. When a UE exchanges IMS signaling once for an initial voice call and then a tracking area update procedure is performed before a next signaling message is generated, connection (RRC connection) of the UE is released from an EPS after the tracking area update procedure is completed. Next, when signaling is required to perform a remaining process for call setup or message transmission is required for bearer setup for media transmission, it starts from a process of generating connection of the UE, thereby increasing a time required for call setup.

Accordingly, a method of preventing a problem that, after a UE is RRC connected to an EPS according to EPS fallback, the RRC connection is released from the EPS will be described in detail with reference to the following drawings.

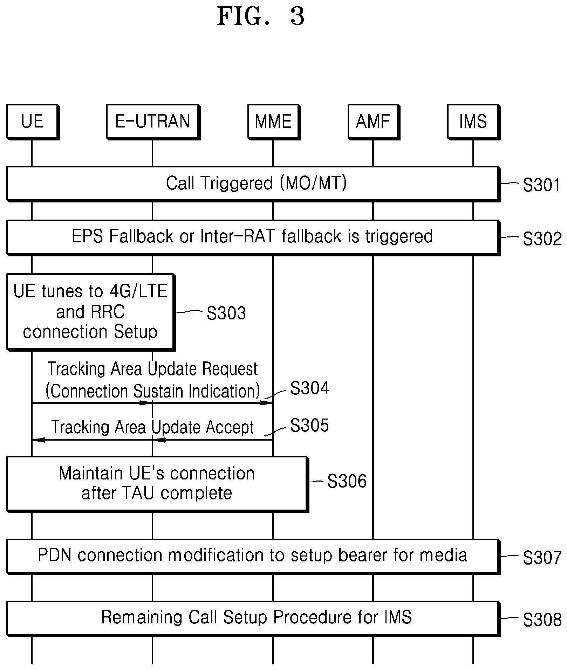

FIG. 3 is a flowchart illustrating a method of preventing connection of a UE from being released from a target system on a control plane, according to an embodiment of the present disclosure.

In this case, according to an embodiment of the present disclosure, the target system may be an EPS. In more detail, FIG. 3 is a diagram illustrating an embodiment for solving a problem (described with reference to FIG. 2) which occurs in a process of connecting a UE connected to a 5GS to an EPS that is a target system. In the present disclosure, media may refer to voice media. However, the present disclosure is not limited thereto, and media may refer to multi-media in which voice media and other types of information are combined with each other. For example, media may be refer to information in which voice data and video data are combined with each other. Also, although an embodiment of the present disclosure relates to a method of improving the quality of a voice service provided in a voice call service or the like, the present disclosure may be applied not only to a voice service but also to other types of services (e.g., video call, gaming, and chatting) as described above.

Referring to FIG. 3, in operation S301, a UE may be registered in a 5G network, and is registered in an IMS network for a voice (or video) service. In operation S301, a voice call (outgoing or incoming) may be generated for the UE.

In operation S302, EPS fallback may be triggered during a process of processing the voice call. In detail, during the process of processing the voice call, an SMF may transmit, to an AMF, a request message for newly generating a quality of service (QoS) flow for transmitting and receiving media (voice/video media) and adding the QoS flow to a session. When the AMF requests a next-generation radio access network (NG-RAN) to newly generate a QoS flow for transmitting and receiving media and add the QoS flow to a session, the NG-RAN may determine whether EPS fallback is required. The NG-RAN may determine whether to perform EPS fallback and may notify a result of the determination to the AMF. Also, the NG-RAN may generate and transmit a message for transitioning the UE to an LTE network (or 4G network).

In operation S303, the UE may obtain information for transitioning to the LTE network through the message received from the network, and may perform an operation for transitioning to the LTE network according to the obtained information. The UE may perform a process of generating RRC connection with an E-UTRAN during the process of transitioning to the LTE network. When a handover method triggered by the NG-RAN is used during the process of performing the EPS fallback, a handover procedure may be performed between the 5G network and the 4G network.

In operation S304, after the RRC connection with the E-UTRAN is generated or the handover procedure is performed, the UE may transmit a tracking area update request message to an MME in an EPC (4G core).

When there is no user data to be transmitted by the UE between operation S301 and operation S304, as described with reference to FIG. 2, the connection of the UE may be released from the EPS after a tracking area update procedure. To prevent this, according to an embodiment of the present disclosure, even when there is no user data generated between operation S301 and operation S304, in order to maintain the connection with the network, the UE may include an identifier indicating that a connected state needs to be maintained in a tracking area update request. For example, the identifier indicating that a connected state needs to be maintained may be a follow-on request, an active flag, or a connection sustain indication. Alternatively, the UE may include an identifier indicating that a tracking area update procedure that is currently requested is EPS fallback (or is caused by a voice/video call) in the tracking area update request.

In operation S305, the MME may transmit a tracking area update accept message to the UE.

In operation S306, when the MME determines that the connection of the UE should be maintained after the tracking area update process is completed or determines that the connection should be maintained for the EPS fallback procedure through the information received from the UE in operation S304, the MME may maintain the connection without releasing the connection even after the tracking area update procedure is completed.

According to an embodiment of the present disclosure, the MME may transmit, through an initial context setup procedure, information including bearer context of the UE to the base station (E-UTRAN) in order to activate a user plane. This may be performed along with a process in which the MME transmits a message for transmitting the tracking area update accept message to the UE in operation S305 to the base station, or may be performed separately before or after the tracking area update accept message is transmitted. To this end, the MME may include information indicating that there is data to be transmitted and received by the UE or a connected state should be maintained, in the message sent to the base station. Also, after operation S305, an operation by which the MME does not separately transmit a request for releasing the connection of the UE to the E-UTRAN may be included.

In operation S307, a process of adding a bearer for media transmission between the UE and a network (NW) or (NFs) may be performed. The process of adding a bearer for media transmission may be performed through the connection that is not released even after the tracking area update process through the above operations.

In operation S308, a remaining IMS call setup procedure may be performed.

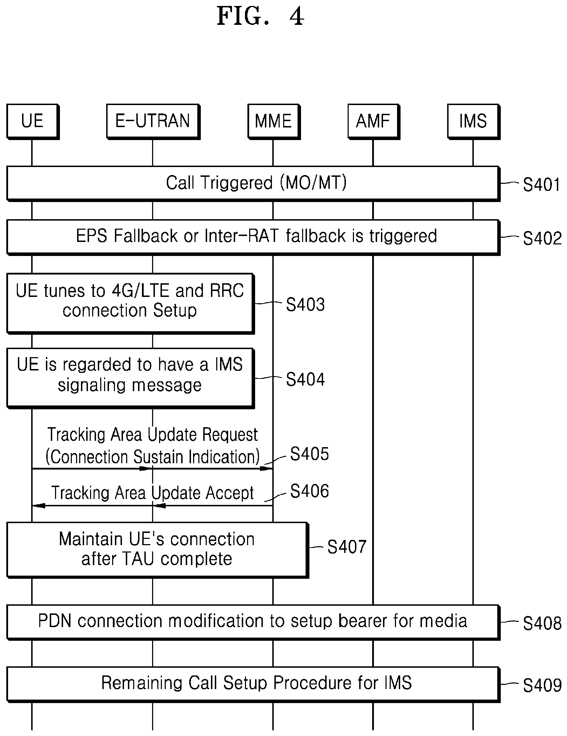

FIG. 4 is a flowchart illustrating a method of preventing connection of a UE from being released from a target system on a user plane, according to an embodiment of the present disclosure.

In this case, according to an embodiment of the present disclosure, the target system may be an EPS. In more detail, FIG. 4 is a diagram illustrating an embodiment for solving a problem (problem described with reference to FIG. 2) which occurs in a process of connecting a UE connected to a 5GS to an EPS that is a target system.

Referring to FIG. 4, in operation S401, a UE is registered in a 5G network, and is registered in an IMS network for a voice (or video) service. A voice call (outgoing/incoming) may be generated for the UE. Operation S401 may correspond to operation S301.

In operation S402, EPS fallback may be triggered during a process of processing the voice cell. In detail, during the process of processing the voice call, an SMF may transmit a request message for newly generating a QoS flow for transmitting and receiving media (voice/video media) and adding the QoS flow to a session to an AMF. When the AMF requests an NG-RAN to newly generate a QoS flow for transmitting and receiving media and add the QoS flow to a session, the NG-RAN may determine whether EPS fallback is required. The NG-RAN may determine whether to perform EPS fallback and may notify a result of the determination to the AMF. Also, the NG-RAN may generate and transmit a message for transitioning the UE to an LTE network (or 4G network). This operation may correspond to operation S302.

In operation S403, the UE may obtain information for transitioning to the LTE network through the message received from the network, and may perform an operation for transitioning to the LTE network according to the obtained information. The UE may perform a process of generating RRC connection with an E-UTRAN during the process of transitioning to the LTE network. When a handover method triggered by the NG-RAN is used during the process of performing the EPS fallback, a handover procedure may be performed between the 5G network and the 4G network.

In operation S404, before the UE transmits a tracking area update request, even when there is no user data to be transmitted, the UE may consider that there is user data to be transmitted in order to maintain the connection with the network even after a tracking area update procedure is completed. To this end, the UE may generate user data by itself. In this case, the generated user data may be a message that does not affect another call processing procedure, for example, may be a message using an OPTIONS method of the IMS. Alternatively, the UE may not generate user data, and may change only state information to a state where there is user data to be transmitted.

In operation S405, because there is user data to be transmitted through operation S404, the UE includes an identifier indicating that a connected state needs to be maintained in a tracking area update request. The identifier indicating that a connected state needs to be maintained may be a follow-on request, an active flag, or a connection sustain indication included in the tracking area update request.

In operation S406, an MME may transmit a tracking area update accept message to the UE.

In operation S407, when the MME determines that the connection of the UE should be maintained after the tracking area update process is completed through the information received from the UE in operation S405, the MME may maintain the connection without releasing the connection even after the tracking area update procedure is completed. According to an embodiment of the present disclosure, the MME may transmit, through an initial context setup procedure, information including bearer context of the UE to the base station (E-UTRAN) in order to activate a user plane. This may be performed along with a process in which the MME transmits a message for transmitting the tracking area update accept message to the UE in operation S406 to the base station, or may be separately performed before/after the tracking area update accept message is transmitted. To this end, the MME may include information indicating that there is data to be transmitted and received by the UE or a connected state should be maintained, in the message sent to the base station. Also, after operation S406, an operation by which the MME does not separately transmit a request for releasing the connection of the UE to the E-UTRAN may be included.

In operation S408, a process of adding a bearer for media transmission between the UE and a NW (or NFs) may be performed. The process of adding a bearer for media transmission may be performed through the connection that is not released even after the tracking area update process through the above operations.

In operation S409, a remaining IMS call setup procedure may be performed.

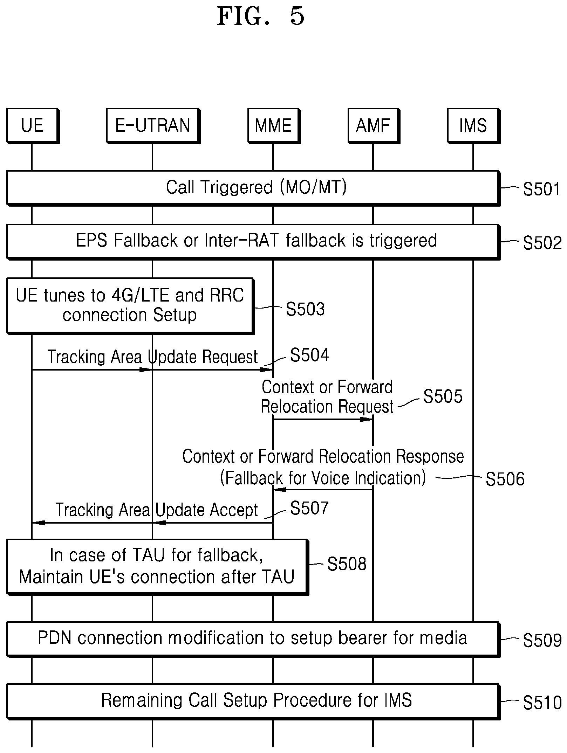

FIG. 5 is a flowchart illustrating a method by which a core network (CN) prevents connection of a UE from being released from a target system, according to an embodiment of the present disclosure.

In this case, according to an embodiment of the present disclosure, the target system may be an EPS. In particular, according to an embodiment of the present disclosure, FIG. 5 is a flowchart illustrating a method of preventing connection of a UE from being released, by using a method of receiving information from an AMF.

Referring to FIG. 5, in operation S501, a UE is registered in a 5G network, and is registered in an IMS network for a voice (or video) service. A voice call (outgoing/incoming) may be generated for the UE. This operation may correspond to operation S301.

In operation S502, EPS fallback may be triggered during a process of processing the voice call. In detail, during the process of processing the voice call, an SMF may transmit a request message for newly generating a QoS flow for transmitting and receiving media (voice/video media) and adding the QoS flow to a session to an AMF. When the AMF requests an NG-RAN to newly generate a QoS flow for transmitting and receiving media and add the QoS flow to a session, the NG-RAN may determine whether EPS fallback is required. The NG-RAN may determine whether to perform EPS fallback and may notify a result of the determination to the AMF. Also, the NG-RAN may generate and transmit a message for transitioning the UE to an LTE network. This operation may correspond to operation S302.

In operation S503, the UE may obtain information for transitioning to the LTE network through the message received from the network, and may perform an operation for transitioning to the LTE network according to the obtained information. The UE may perform a process of generating RRC connection with an E-URTRAN during the process of transitioning to the LTE network. When a handover method triggered by the NG-RAN is used during the process of performing the EPS fallback, a handover procedure may be performed between the 5G network and the 4G network.

In operation S504, after the RRC connection is generated or the handover procedure is performed, the UE may transmit a tracking area update request message to an MME in an EPC (4G core).

In operation S505, during the tracking area update process or the handover process, the MME may transmit a request message for receiving context of the UE (e.g., a context request in the case of tracking area update (TAU) and a forward relocation request in the case of handover) to the AMF.

In operation S506, the AMF may transmit a context response or a forward relocation response at the request of the MME, and the message (i.e., the context response or the forward relocation response) may include MM context of the UE. Also, the message (i.e., the context response or the forward relocation response) may include information indicating that the UE is currently in the EPS fallback process or information indicating that the connection of the UE should be maintained.

In operation S507, the MME may transmit a tracking area update accept message to the UE.

In operation S508, when the MME determines that the connection of the UE should be maintained after the tracking area update process is completed or determines that the connection should be maintained for the EPS fallback procedure through the information received from the AMF in operation S506, the MME may maintain the connection without releasing the connection even after the tracking area update procedure is completed. According to an embodiment of the present disclosure, the MME may transmit, through an initial context setup procedure, information including bearer context of the UE to the base station (E-UTRAN) in order to activate a user plane. This may be performed along with a process in which the MME transmits a message for transmitting the tracking area update accept message to the UE in operation S507 to the base station or may be separately performed before/after the tracking area update accept message is transmitted. To this end, the MME may include information indicating that there is data to be transmitted and received by the UE or a connected state should be maintained, in the message sent to the base station. Also, after operation S507, an operation by which the MME does not separately transmit a request for releasing the connection of the UE to the E-UTRAN may be included.

In operation S509, a process of adding a bearer for media transmission between the UE and an NW (or NFs) may be performed. Operation S509 may be performed through the connection that is not released even after the tracking area update process through the above operations.

In operation S510, a remaining IMS call setup procedure may be performed.

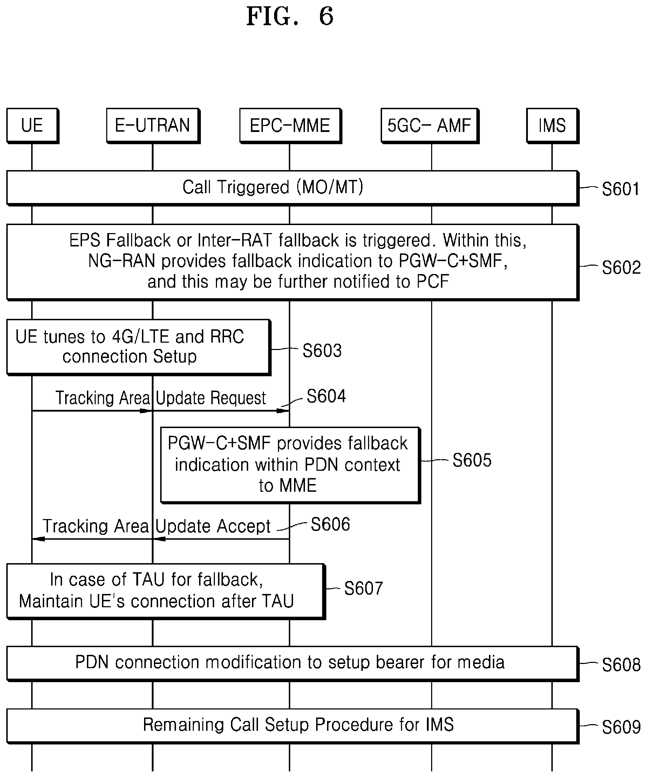

FIG. 6 is a flowchart illustrating a method by which a CN prevents connection of a UE from being released from a target system, according to an embodiment of the present disclosure.

In this case, according to an embodiment of the present disclosure, the target system may be an EPS. In particular, according to an embodiment of the present disclosure, FIG. 6 is a flowchart illustrating a method of preventing connection of a UE from being released, by using a method of receiving information from an SMF.

In operation S601, a UE is registered in a 5G network, and is registered in an IMS network for a voice (or video) service. A voice call (outgoing/incoming) may be generated for the UE. This operation may correspond to operation S301.

In operation S602, EPS fallback may be triggered during a process of processing the voice call. In detail, during the process of processing the voice call, an SMF may transmit a request message for newly generating a QoS flow for transmitting and receiving media (voice/video media) and adding the QoS flow to a session to an AMF. When the AMF requests an NG-RAN to newly generate a QoS flow for transmitting and receiving media and add the QoS flow to a session, the NG-RAN may determine whether EPS fallback is required. The NG-RAN may determine whether to perform EPS fallback and may notify a result of the determination to the AMF. Also, the NG-RAN may generate and transmit a message for transitioning the UE to an LTE network. Also, when EPS fallback occurs, the AMF may notify a PGW-C + SMF that mobility is in progress due to the EPS fallback for an IMS voice.

In operation S603, the UE may obtain information for transitioning to the LTE network through the message received from the network, and may perform an operation for transitioning to the LTE network according to the obtained information. The UE may perform a process of generating RRC connection with an E-UTRAN during the process of transitioning to the LET network. When a handover method triggered by the NG-RAN is used during the process of performing EPS fallback, a handover procedure may be performed between the 5G network and the 4G network.

In operation S604, after the RRC connection is generated or the handover procedure is performed, the UE may transmit a tracking area update request message to an MME in an EPC (4G core).

In operation S605, during the tracking area update process or the handover process, the MME may receive information about PDN connection from the PGW-C + SMF, and in this case, the PGW-C + SMF may transmit, to the MME, information indicating that mobility is in progress due to the EPS fallback for the IMS voice or the connection of the UE needs to be maintained. An SGW may transmit information between the MME and the PGW-C + SMF.

In operation S606, the MME may transmit a tracking area update accept message to the UE.

In operation S607, when the MME determines that the connection of the UE should be maintained after the tracking area update process is completed or determines that the connection should be maintained for the EPS fallback procedure through the information transmitted by the PGW-C + SMF in operation S605, the MME may maintain the connection without releasing the connection even after the tracking area update procedure is completed. According to an embodiment of the present disclosure, the MME may transmit, through an initial context setup procedure, information including bearer context of the UE to the base station (E-UTRAN) in order to activate a user plane. This may be performed along with a process of transmitting a message for transmitting the tracking area update accept message to the UE in operation S606 to the base station or may be separately performed before/after the tracking area update accept message is transmitted. To this end, the MME may include information indicating that there is data to be transmitted and received by the UE or a connected state should be maintained, in the message sent to the base station. Also, after operation S606, an operation by which the MME does not separately transmit a request for releasing the connection of the UE to the E-UTRAN may be included.

In operation S608, a process of adding a bearer for media transmission between the UE and an NW (or NFs) may be performed. The process of adding a bearer for media transmission may be performed through the connection that is not released even after the tracking area update process through the above step.

In operation S609, a remaining IMS call setup procedure may be performed.

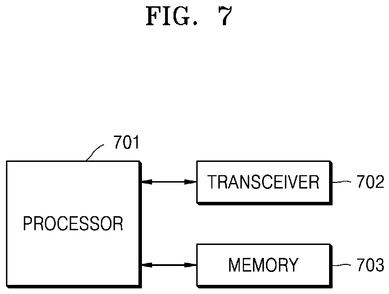

FIG. 7 is a block diagram schematically illustrating a structure of a UE, according to an embodiment of the present disclosure.

Referring to FIG. 7, a UE may include a processor 701, a transceiver 702, and a memory 703. However, elements of the UE are not limited to those illustrated in FIG. 7, and may include more or fewer elements than those illustrated in FIG. 7. Also, the processor 701, the transceiver 702, and the memory 703 may be configured as one chip. In the present disclosure, the processor 701 may be defined as a circuit, an application-specific integrated circuit, or at least one processor. However, the present disclosure is not limited thereto.

The processor 701 according to an embodiment of the present disclosure may control an overall operation of the UE. For example, the processor 701 may control a signal flow between blocks to perform operations according to flowcharts described above. Also, the processor 701 may write data to and read data from the memory 703. The processor 701 may perform functions of a protocol stack required by communication standards. To this end, the processor 701 may include at least one processor or micro-processor. Alternatively, the processor 701 may be a part of a processor. Also, a part of the transceiver 702 and the processor 701 may be referred to as a communication processor (CP)

According to an embodiment of the present disclosure, the processor 701 may control operations of the UE described with reference to FIGS. 1 to 6.

The processor 701 according to an embodiment of the disclosure may control the transceiver 702 to transmit a tracking area update request including an identifier indicating that a connected state needs to be maintained to an MME, by executing a program stored in the memory 703.

Also, even when there is no user to be transmitted before the tracking area update request is transmitted, the processor 701 may generate user data by itself by considering that there is user data to be transmitted in order to maintain connection with a network even after a tracking area update procedure is completed, and may control the transceiver 702 to transmit the generated user data, by executing a program stored in the memory 703.

The transceiver 702 according to an embodiment of the present disclosure may perform functions for transmitting and receiving signals through a wireless channel. For example, the transceiver 702 may perform conversion between a baseband signal and a bit string according to physical layer specifications of a system. For example, for data transmission, the transceiver 702 may generate complex symbols by encoding and modulating a transmission bit string. For data reception, the transceiver 702 may reconstruct a reception bit string by demodulating and decoding a baseband signal. Also, the transceiver 702 may up-convert a baseband signal into a radio frequency (RF) band signal and then may transmit the RF band signal through an antenna, and may down-convert an RF band signal received through the antenna into a baseband signal. For example, the transceiver 702 may include a transmission filter, a reception filter, an amplifier, a mixer, an oscillator, a digital-to-analog converter (DAC), and an analog-to-digital converter (ADC). Also, the transceiver 702 may include a plurality of transmission and reception paths. Furthermore, the transceiver 702 may include at least one antenna array including a plurality of antenna elements. In terms of hardware, the transceiver 702 may include a digital circuit and an analog circuit (e.g., a radio frequency integrated circuit (RFIC)). The digital circuit and the analog circuit may be implemented in one package. Also, the transceiver 702 may include a plurality of RF chains.

The memory 703 according to an embodiment of the present disclosure may store data such as a basic program, an application program, and configuration information for an operation of the UE. The memory 703 may include a volatile memory, a non-volatile memory, or a combination of a volatile memory and a non-volatile memory. The memory 703 may provide stored data at a request of the processor 701. The memory 703 may store at least one of information transmitted and received through the transceiver 702 or information generated by the processor 701.

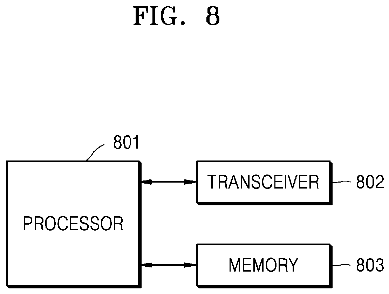

FIG. 8 is a block diagram schematically illustrating a structure of a base station, according to an embodiment of the present disclosure.

Referring to FIG. 8, a base station may include a processor 801, a transceiver 802, and a memory 803. However, the present disclosure is not limited thereto, and the base station may include more or fewer elements than those illustrated in FIG. 8. Also, the processor 801, the transceiver 802, and the memory 803 may be configured as one chip. In the present disclosure, the processor may be defined as a circuit, an application-specific integrated circuit, or at least one processor. However, the present disclosure is not limited thereto.

The processor 801 according to an embodiment of the present disclosure may control an overall operation of the base station. For example, the processor 801 may control a signal flow between blocks to perform operations according to flowcharts described above. Also, the processor 801 may write data to and read data from the memory 803. The processor 801 may perform functions of a protocol stack required by communication standards. To this end, the processor 801 may include at least one processor or micro-processor. Alternatively, the processor 801 may be a part of a processor. Also, a part of the transceiver 802 and the processor 801 may be referred to as a CP.

According to an embodiment of the present disclosure, the processor 801 may control operations of the base station described with reference to FIGS. 1 to 6.

According to an embodiment of the present disclosure, the processor 801 may prevent connection of a UE from being released from a target system in order to improve the quality of a media service, by executing a program stored in the memory 803.

The transceiver 802 according to an embodiment of the present disclosure may perform functions for transmitting and receiving a signal through a wireless channel. For example, the transceiver 802 may perform conversion between a baseband signal and a bit string according to physical layer specifications of a system. For example, for data transmission, the transceiver 802 may generate complex symbols by encoding and modulating a transmission bit string. Also, for data reception, the transceiver 802 may reconstruct a reception bit string by demodulating and decoding a baseband signal. Also, the transceiver 802 may up-convert a baseband signal into an RF band signal and then may transmit the RF band signal through an antenna, and may down-convert an RF band signal received through the antenna into a baseband signal. For example, the transceiver 802 may include a transmission filter, a reception filter, an amplifier, a mixer, an oscillator, a DAC, and an ADC. Also, the transceiver 802 may include a plurality of transmission and reception paths. Furthermore, the transceiver 802 may include at least one antenna array including a plurality of antenna elements. In terms of hardware, the transceiver 802 may include a digital circuit and an analog circuit (e.g., an RFIC). The digital circuit and the analog circuit may be implemented in one package. Also, the transceiver 802 may include a plurality of RF chains.

The memory 803 according to an embodiment of the present disclosure may store data such as a basic program, an application program, and configuration information for an operation of the base station. The memory 803 may include a volatile memory, a non-volatile memory, or a combination of a volatile memory and a non-volatile memory. The memory 803 may provide stored data at a request of the processor 801. The memory 803 may store at least one of information transmitted and received through the transceiver 802 and information generated by the processor 801.

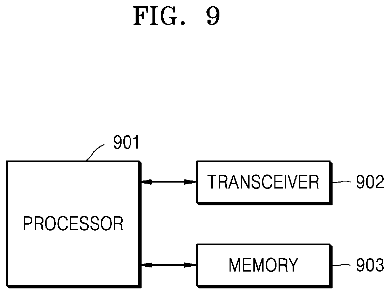

FIG. 9 is a block diagram schematically illustrating a structure of a network entity, according to an embodiment of the present disclosure.

Referring to FIG. 9, a network entity may include a processor 901, a transceiver 902, and a memory 903. However, the disclosure is not limited thereto, and the network entity may include more or fewer elements than those illustrated in FIG. 9. Also, the processor 901, the transceiver 902, and the memory 903 may be configured as one chip. In the present disclosure, the processor 901 may be defined as a circuit, an application-specific integrated circuit, or at least one processor. However, the present disclosure is not limited thereto.

The network entity may correspond to each NF illustrated in FIG. 1. Also, the network entity may correspond to any of entities included in a network structure in FIG. 2. That is, the network entity may correspond to an MME, an AMF, an IMS, or an SMF of FIG. 5, or may correspond to an E-UTRAN.

The processor 901 according to an embodiment of the present disclosure may control an overall operation of the network entity. For example, the processor 901 may control a signal flow between blocks to perform operations according to flowcharts described above. Also, the processor 901 may write data to and read data from the memory 903. The processor 901 may perform functions of a protocol stack required by communication standards. To this end, the processor 901 may include at least one processor or micro-processor. Alternatively, the processor 901 may be a part of a processor. Also, a part of the transceiver 902 and the processor 901 may be referred to as a CP.

According to an embodiment of the present disclosure, the processor 901 may control operations of the network entity described with reference to FIGS. 1 to 6.

According to an embodiment of the present disclosure, the transceiver 902 may transmit and receive a signal to and from at least one of a UE or other network entities. The signal transmitted and received to and from at least one of the UE or the other network entities may include control information and data.

The transceiver 902 according to an embodiment of the present disclosure may perform functions for transmitting and receiving a signal via a wireless channel. For example, the transceiver 902 may perform conversion between a baseband signal and a bit string according to physical layer specifications of a system. For example, for data transmission, the transceiver 902 may generate complex symbols by encoding and modulating a transmission bit string. Also, for data reception, the transceiver 902 may reconstruct a reception bit string by demodulating and decoding a baseband signal. Also, the transceiver 902 may up-convert a baseband signal into an RF band signal and then may transmit the RF signal through an antenna, and may down-convert an RF band signal received through the antenna into a baseband signal. For example, the transceiver 902 may include a transmission filter, a reception filter, an amplifier, a mixer, an oscillator, a DAC, and an ADC. Also, the transceiver 902 may include a plurality of transmission and reception paths. Furthermore, the transceiver 902 may include at least one antenna array including a plurality of antenna elements. In terms of hardware, the transceiver 902 may include a digital circuit and an analog circuit (e.g., an RFIC). The digital circuit and the analog circuit may be implemented in one package. Also, the transceiver 902 may include a plurality of RF chains.

The memory 903 according to an embodiment of the present disclosure may store data such as a basic program, an application program, and configuration information for an operation of the network entity. The memory 903 may include a volatile memory, a non-volatile memory, or a combination of a volatile memory and a non-volatile memory. The memory 903 may provide stored data at a request of the processor 901. The memory 903 may store at least one of information transmitted and received through the transceiver 902 and information generated by the processor 901.

Methods according to the claims or the embodiments of the present disclosure described herein may be implemented by hardware, software, or a combination of hardware and software.

When the methods are implemented by software, a computer-readable storage medium or a computer program product storing one or more programs (software modules) may be provided. The one or more programs that are stored in the computer-readable storage medium or the computer program product are configured to be executable by one or more processors in an electronic device. The one or more programs include instructions for allowing the electronic device to execute the methods according to the claims or the embodiments of the present disclosure.

The programs (e.g., software modules or software) may be stored in a random-access memory (RAM), a non-volatile memory including a flash memory, a read-only memory (ROM), an electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in a memory including any combination of some or all of the above storage media. Also, each of the memories may include a plurality of memories.

Also, the programs may be stored in an attachable storage device that is accessible through a communication network, such as the Internet, an intranet, a local area network (LAN), a wide LAN (WLAN), or a storage area network (SAN), or a combination thereof. Such a storage device may be connected through an external port to an apparatus for performing an embodiment of the present disclosure. Furthermore, an additional storage device on the communication network may access the apparatus for performing an embodiment of the present disclosure.

In the afore-described embodiments of the present disclosure, an element or elements included in the present disclosure are expressed in a singular or plural form depending on the described embodiments of the present disclosure. However, the singular or plural form is selected appropriately for a condition provided for convenience of explanation, and the present disclosure is not limited to the singular or plural form. An element expressed in a singular form may include a plurality of elements and elements expressed in a plural form may include a single element.

Operations of a network entity, a base station or a UE described above may be performed by providing a memory device storing corresponding program code to a component of the network entity, the base station, or the UE. That is, a controller of the network entity, the base station, or the UE may perform the operations by reading and executing the program code stored in the memory device by using a processor or a central processing unit (CPU).

Various elements and modules of the network entity, the base station, or the UE may operate by using a hardware circuit, for example, a complementary metal oxide semiconductor-based logic circuit, firmware, software, and/or a combination of hardware, firmware, and/or software embedded in a machine-readable medium. For example, various electric structures and methods may be performed by using electric circuits such as transistors, logic gates, and application-specific semiconductors.

## Claims

1. A method performed by a user equipment, UE, in a wireless communication system, the method comprising:
receiving (S402), from a next-generation radio access network, NG-RAN, a message including information indicating evolved packet system, EPS, fallback;
transmitting (S405), to a mobility management entity, MME, a tracking area update, TAU, request message including an active flag indicating that a connection between an EPS and the UE is required to be maintained after completion of a tracking area updating procedure in case that the UE is connected to the EPS; and
receiving (S406), from the MME, a TAU accept message, based on the TAU request message.

2. The method of claim 1, wherein the UE is registered in a 5th generation system, 5GS, and an internet protocol multimedia subsystem, IMS, before receiving the message including the information indicating the EPS fallback.

3. The method of claim 1, further comprising:
maintaining connection between the MME and the UE, based on the TAU request message.

4. The method of claim 1, further comprising:
performing handover from the 5GS to the EPS for connecting to the EPS.

5. The method of claim 1, further comprising:
identifying a state of the UE as a state where there is user data to be transmitted.

6. The method of claim 1, further comprising:
generating temporary user data.

7. A user equipment, UE, performed in a wireless communication system, the UE comprising:
a transceiver (S702); and
at least one processor (S701) configured to:
control the transceiver to receive, from a next-generation radio access network, NG-RAN, a message including information indicating evolved packet system, EPS, fallback,
control the transceiver to transmit, to a mobility management system, MME, a tracking area update, TAU, request message including an active flag indicating that a connection between an EPS and the UE is required to be maintained after completion of a tracking area updating procedure in case that the UE is connected to an EPS, and
control the transceiver to receive, from the MME, a TAU accept message, based on the TAU request message.

8. The UE of claim 7, wherein the UE is registered in a 5th generation system, 5GS, and an internet protocol multimedia subsystem, IMS, before receiving the message including the information indicating the EPS fallback.

9. The UE of claim 7, wherein the at least one processor is further configured to maintain connection between the MME and the UE, based on the TAU request message.

10. The UE of claim 7, wherein the at least one processor is further configured to perform handover from the 5GS to the EPS for connecting to the EPS.

11. The UE of claim 7, wherein the at least one processor is further configured to identify a state of the UE as a state where there is user data to be transmitted.

12. The UE of claim 7, wherein the at least one processor is further configured to generate temporary user data.

## Patentansprüche

1. Verfahren, das von einem Benutzergerät, UE, in einem drahtlosen Kommunikationssystem durchgeführt wird, wobei das Verfahren Folgendes umfasst:
Empfangen (S402), von einem Funkzugriffsnetzwerk der nächsten Generation, NG-RAN, einer Nachricht, die Informationen beinhaltet, die einen Rückgriff auf ein Evolved Packet System, EPS, angeben;
Übertragen (S405), an eine Mobilitätsverwaltungseinheit, MME, einer Verfolgungsbereichsaktualisierungs-, TAU, -Anforderungsnachricht, die eine Aktivierungsmarkierung beinhaltet, die angibt, dass eine Verbindung zwischen einem EPS und dem UE nach Abschluss einer Verfolgungsbereichsaktualisierungsprozedur aufrechterhalten werden muss, falls das UE mit dem EPS verbunden ist; und
Empfangen (S406), von der MME, einer TAU-Annahmenachricht basierend auf der TAU-Anforderungsnachricht.

2. Verfahren nach Anspruch 1, wobei das UE in einem System der fünften Generation, 5GS, und einem Internetprotokoll-Multimedia-Subsystem, IMS, registriert ist, bevor es die Nachricht empfängt, die die Informationen beinhaltet, die den Rückgriff auf das EPS angeben.

3. Verfahren nach Anspruch 1, ferner umfassend:
Aufrechterhalten der Verbindung zwischen der MME und dem UE basierend auf der TAU-Anforderungsnachricht.

4. Verfahren nach Anspruch 1, ferner umfassend:
Durchführen einer Übergabe vom 5GS an das EPS, um eine Verbindung mit dem EPS herzustellen.

5. Verfahren nach Anspruch 1, ferner umfassend:
Identifizieren eines Zustands des UE als einen Zustand, in dem zu übertragende Benutzerdaten vorhanden sind.

6. Verfahren nach Anspruch 1, ferner umfassend:
Erzeugen temporärer Benutzerdaten.

7. Benutzergerät, UE, das in einem drahtlosen Kommunikationssystem durchgeführt wird, wobei das UE Folgendes umfasst:
einen Transceiver (S702); und
mindestens einen Prozessor (S701), der konfiguriert ist zum:
Steuern des Transceivers zum Empfangen, von einem Funkzugriffsnetzwerk der nächsten Generation, NG-RAN, einer Nachricht, die Informationen beinhaltet, die einen Rückgriff auf ein Evolved Packet System, EPS, angeben,
Steuern des Transceivers zum Übertragen, an eine Mobilitätsverwaltungseinheit, MME, einer Verfolgungsbereichsaktualisierungs-, TAU, -Anforderungsnachricht, die eine Aktivierungsmarkierung beinhaltet, die angibt, dass eine Verbindung zwischen einem EPS und dem UE nach Abschluss einer Verfolgungsbereichsaktualisierungsprozedur aufrechterhalten werden muss, falls das UE mit einem EPS verbunden ist, und
Steuern des Transceivers zum Empfangen, von der MME, einer TAU-Annahmenachricht basierend auf der TAU-Anforderungsnachricht.

8. UE nach Anspruch 7, wobei das UE in einem System der fünften Generation, 5GS, und einem Internetprotokoll-Multimedia-Subsystem, IMS, registriert ist, bevor es die Nachricht empfängt, die die Informationen beinhaltet, die den Rückgriff auf das EPS angeben.

9. UE nach Anspruch 7, wobei der mindestens eine Prozessor ferner konfiguriert ist, um basierend auf der TAU-Anforderungsnachricht die Verbindung zwischen der MME und dem UE aufrechtzuerhalten.

10. UE nach Anspruch 7, wobei der mindestens eine Prozessor ferner konfiguriert ist, um eine Übergabe vom 5GS an das EPS durchzuführen, um eine Verbindung mit dem EPS herzustellen.

11. UE nach Anspruch 7, wobei der mindestens eine Prozessor ferner konfiguriert ist, um einen Zustand des UE als einen Zustand zu identifizieren, in dem zu übertragende Benutzerdaten vorhanden sind.

12. UE nach Anspruch 7, wobei der mindestens eine Prozessor ferner konfiguriert ist, um temporäre Benutzerdaten zu erzeugen.

## Revendications

1. Procédé exécuté par un équipement utilisateur, UE, dans un système de communication sans fil, le procédé comprenant :
recevoir (S402), d'un réseau d'accès radio de prochaine génération, NG-RAN, un message comprenant des informations indiquant un repli de système de paquets évolué, EPS ;
transmettre (S405), à une entité de gestion de mobilité, MME, un message de demande de mise à jour de zone de suivi, TAU, comprenant un indicateur actif indiquant qu'une connexion entre un EPS et l'UE doit être maintenue après l'achèvement d'une procédure de mise à jour de zone de suivi dans le cas où l'UE est connectée à l'EPS ; et
recevoir (S406), en provenance de la MME, d'un message d'acceptation TAU, basé sur le message de demande TAU.

2. Procédé de la revendication 1, dans lequel l'UE est enregistré dans un système de 5ème génération, 5GS, et un sous-système multimédia de protocole internet, IMS, avant de recevoir le message comprenant les informations indiquant le repli EPS.

3. Procédé de la revendication 1, comprenant en outre :
maintenir la connexion entre la MME et l'UE, en se basant sur le message de demande TAU.

4. Procédé de la revendication 1, comprenant en outre :
effectuer le transfert du 5GS vers l'EPS pour se connecter à l'EPS.

5. Procédé de la revendication 1, comprenant en outre :
identifier un état de l'UE comme un état dans lequel des données utilisateur doivent être transmises.

6. Procédé de la revendication 1, comprenant en outre :
générer des données utilisateur temporaires.

7. Équipement utilisateur, UE, exécuté dans un système de communication sans fil, l'UE comprenant :
un émetteur-récepteur (S702) ; et
au moins un processeur (S701) configuré pour :
commander l'émetteur-récepteur pour qu'il reçoive, d'un réseau d'accès radio de prochaine génération, NG-RAN, un message comprenant des informations indiquant un repli de système de paquets évolué, EPS,
commander l'émetteur-récepteur pour qu'il transmette, à un system de gestion de mobilité, MME, un message de demande de mise à jour de zone de suivi, TAU, comprenant un indicateur actif indiquant qu'une connexion entre un EPS et l'UE doit être maintenue après l'achèvement d'une procédure de mise à jour de zone de suivi dans le cas où l'UE est connectée à un EPS, et
commander l'émetteur-récepteur pour qu'il reçoive, en provenance de la MME, d'un message d'acceptation TAU, basé sur le message de demande TAU.

8. UE de la revendication 7, dans lequel l'UE est enregistré dans un système de 5ème génération, 5GS, et un sous-système multimédia de protocole internet, IMS, avant de recevoir le message comprenant les informations indiquant le repli EPS.

9. UE de la revendication 7, dans lequel l'au moins un processeur est en outre configuré pour maintenir la connexion entre la MME et l'UE, sur la base du message de demande TAU.

10. UE de la revendication 7, dans lequel l'au moins un processeur est en outre configuré pour effectuer un transfert du 5GS vers l'EPS pour se connecter à l'EPS.

11. UE de la revendication 7, dans lequel l'au moins un processeur est en outre configuré pour identifier un état de l'UE comme un état dans lequel des données utilisateur doivent être transmises.

12. UE de la revendication 7, dans lequel l'au moins un processeur est en outre configuré pour générer des données utilisateur temporaires.
